# EUROPÄISCHE PATENTANMELDUNG

(11) **EP 4 541 551 A1**
(43) Veröffentlichungstag der Anmeldung: **23.04.2025**
(21) Anmeldenummer: 24205781.8
(22) Anmeldetag: 10.10.2024
(51) Int. Cl.: B29C 51/26

(54) **VORRICHTUNG UND VERFAHREN ZUR HERSTELLUNG EINES VERPACKUNGSELEMENTS**

(30) Priorität: 20.10.2023 DE 102023128972
(71) Anmelder: Syntegon Technology GmbH, 71332 Waiblingen (DE)
(72) Erfinder: Beck, Martin, 73655 Plüderhausen (DE); Bischoff, Bernd, 71332 Waiblingen (DE)
(74) Vertreter: Kreuels, Justus

(57) **Zusammenfassung**

Vorrichtung (1) zur Herstellung eines Verpackungselements (2), zumindest aufweisend:
- zumindest eine Umformeinrichtung (3) zum Umformen zumindest eines Vorformlings (4) in zumindest ein Formteil (5);
- zumindest eine Stanzeinrichtung (6) zum zumindest teilweisen Entfernen eines Rands (7) des zumindest einen Formteils (5); und
- eine Fördereinrichtung (8) mit zumindest einem Klemmhalter (9, 10), durch den der zumindest eine Vorformling (4) beim Umformen in der zumindest einen Umformeinrichtung (3) haltbar, durch den das zumindest eine Formteil (5) von der zumindest einen Umformeinrichtung (3) zu der zumindest einen Stanzeinrichtung (6) transportierbar und durch den das zumindest eine Formteil (5) beim zumindest teilweisen Entfernen des Rands (7) des zumindest einen Formteils (5) in der zumindest einen Stanzeinrichtung (6) haltbar ist.

Zudem wird ein Verfahren zur Herstellung eines Verpackungselements (2) vorgeschlagen.

## Beschreibung

Die vorliegende Erfindung betrifft eine Vorrichtung und ein Verfahren zur Herstellung eines Verpackungselements. Das Verpackungselement ist als Verpackung für ein Packgut bzw. zur Herstellung einer solchen Verpackung verwendbar.

Das Verpackungselement kann beispielsweise als Schale, Napf oder Becher ausgebildet sein. Das Verpackungselement kann eine Aufnahmekavität für das Packgut aufweisen. Die Aufnahmekavität ist mit einem Packgut, beispielsweise einer Flüssigkeit oder einem Pulver, wie zum Beispiel Kaffeepulver, befüllbar. Nach dem Befüllen der Aufnahmekavität mit dem Packgut kann die Aufnahmekavität mit einem, insbesondere peelfähigen, Siegel verschlossen werden. Das Siegel kann das Packgut in der Aufnahmekavität insbesondere gasdicht verschließen. Das Siegel kann beispielsweise eine Folie oder ein Deckel sein. Das Verpackungselement kann einen Siegelrand aufweisen, an dem das Siegel befestigbar ist. Die Befestigung kann beispielsweise durch eine Schweiß- oder Klebeverbindung erfolgen.

Bei der Herstellung des Verpackungselements kann ein Vorformling, zum Beispiel in Form eines Rohlings oder einer Ronde, zu einem Formteil tiefgezogen werden. Beim Tiefziehen wird der Vorformling in einem Ziehspalt zwischen einem Niederhalter und einer Matrize eingespannt bzw. angeordnet. Anschließend wird der Vorformling im Bereich eines späteren Bodens des Verpackungselements bzw. im Bereich des späteren Bodens der Aufnahmekavität mit einem Stempel in die Matrize gezogen, wobei Material des Vorformlings aus dem Ziehspalt in die Matrize nachfließen kann. Beim Tiefziehen entsteht in einem Ziehabschnitt des Formteils die Aufnahmekavität und an einem oberen Ende des Formteils ein umlaufender Rand. Der umlaufende Rand kann, insbesondere durch ein ungleichmäßiges Nachfließen des Materials des Vorformlings aus dem Ziehspalt, undefiniert und/oder ungleichmäßig sein. Daher muss der Rand des Formteils mit hohem Aufwand beschnitten werden.

Hiervon ausgehend ist es Aufgabe der vorliegenden Erfindung, die mit Bezug auf den Stand der Technik geschilderten Probleme wenigstens teilweise zu lösen und insbesondere eine Vorrichtung zur Herstellung eines Verpackungselements anzugeben, die das Beschneiden des Rands des Formteils erleichtert. Zudem soll ein Verfahren zur Herstellung eines Verpackungselements angegeben werden, das das Beschneiden des Rands des Formteils erleichtert.

Diese Aufgaben werden gelöst mit einer Vorrichtung und einem Verfahren gemäß den Merkmalen der unabhängigen Ansprüche. Weitere vorteilhafte Ausgestaltungen sind in den abhängig formulierten Ansprüchen sowie in der Beschreibung und insbesondere auch in der Figurenbeschreibung angegeben. Es ist darauf hinzuweisen, dass der Fachmann einzelne Merkmale in technologisch sinnvoller Weise miteinander kombinieren kann und damit zu weiteren Ausgestaltungen der Erfindung gelangt.

Hierzu trägt eine Vorrichtung zur Herstellung eines Verpackungselements bei, die zumindest Folgendes aufweist:
- zumindest eine Umformeinrichtung zum Umformen zumindest eines Vorformlings in zumindest ein Formteil;
- zumindest eine Stanzeinrichtung zum zumindest teilweisen Entfernen eines Rands des zumindest einen Formteils; und
- eine Fördereinrichtung mit zumindest einem Klemmhalter, durch den der zumindest eine Vorformling beim Umformen in der zumindest einen Umformeinrichtung haltbar, durch den das zumindest eine Formteil von der zumindest einen Umformeinrichtung zu der zumindest einen Stanzeinrichtung transportierbar und durch den das zumindest eine Formteil beim zumindest teilweisen Entfernen des Rands des zumindest einen Formteils in der zumindest einen Stanzeinrichtung haltbar ist.

Das Verpackungselement ist insbesondere zur Herstellung einer Verpackung zum Verpacken eines Packguts verwendbar. Das Verpackungselement kann beispielsweise eine Schale, ein Napf oder ein Becher sein.

Die Vorrichtung weist zumindest eine Umformeinrichtung zum Umformen eines Vorformlings in ein Formteil auf. Die Vorrichtung kann eine Mehrzahl von Umformeinrichtungen, beispielsweise 2 bis 20 Umformeinrichtungen, aufweisen. Die Mehrzahl von Umformeinrichtungen kann (insbesondere orthogonal zu einer Förderrichtung der Vorformlinge und/oder der Formteile) nebeneinander angeordnet sein. Durch die Mehrzahl von Umformeinrichtungen ist eine Mehrzahl von Vorformlingen, beispielsweise 2 bis 20 Vorformlinge, gleichzeitig in eine Mehrzahl von Formteilen umformbar. Der Vorformling kann ein Rohling und/oder eine Ronde sein. Der Vorformling kann zumindest teilweise aus faserbasiertem Packstoff, Papier, Pappe, Kunststoff und/oder Metall bestehen. Der Vorformling kann flach sein und/oder eine Materialdicke von beispielsweise 0,1 mm [Millimeter] bis 5 mm aufweisen. Der Vorformling kann einen runden Querschnitt haben. Der Vorformling kann einen Durchmesser von beispielsweise 20 mm bis 300 mm oder eine Kantenlänge von beispielsweise 20 mm bis 300 mm aufweisen. Die Umformeinrichtung kann eine Tiefziehpresse sein. Die Umformeinrichtung kann einen Stempel, eine Matrize und/oder einen Niederhalter umfassen. Der Niederhalter ist insbesondere zwischen einer Niederhalteposition und einer Freigabestellung verstellbar. Der Niederhalter kann zwischen der Niederhalteposition und der Freigabestellung elektrisch, hydraulisch oder pneumatisch verstellbar sein. Der Niederhalter ist insbesondere relativ zu der Matrize und/oder unabhängig von dem Stempel verstellbar. Beim Tiefziehen bzw. in der Niederhalteposition des Niederhalters ist der Vorformling in einem Ziehspalt zwischen dem Niederhalter und der Matrize einklemmbar bzw. positionierbar. Anschließend ist der Vorformling im Bereich eines späteren Bodens des Verpackungselements bzw. im Bereich eines späteren Bodens einer Aufnahmekavität mit einem Stempel in die Matrize ziehbar, wobei insbesondere Material des Vorformlings aus dem Ziehspalt in die Matrize nachfließen kann. Beim Tiefziehen entsteht in einem Ziehabschnitt des Formteils die Aufnahmekavität und an einem oberen Ende des Formteils ein umlaufender Rand. Das Formteil kann nach dem Umformen insbesondere schalen-, napf- oder becherförmig sein. Das Formteil weist nach dem Umformen an einem oberen Ende einen umlaufenden Rand auf. Der umlaufende Rand kann insbesondere im Ziehspalt ausgebildet sein. Der Rand kann ringförmig ausgebildet sein und/oder (insbesondere in einer radialen Richtung des Formteils) eine Randbreite von beispielsweise 1 mm bis 20 mm aufweisen.

Die Vorrichtung weist zumindest eine Stanzeinrichtung zum zumindest teilweisen Entfernen des Rands des zumindest einen Formteils auf. Die Vorrichtung kann eine Mehrzahl von Stanzeinrichtungen aufweisen, beispielsweise 2 bis 20 Stanzeinrichtungen. Die Mehrzahl von Stanzeinrichtung kann (insbesondere orthogonal zur Förderrichtung der Vorformlinge und/oder der Formteile) nebeneinander angeordnet sein. Durch die Mehrzahl von Stanzeinrichtungen ist ein Rand einer Mehrzahl von Formteilen, beispielsweise 2 bis 20 Formteilen, gleichzeitig zumindest teilweise entfernbar. Insbesondere ist ein äußerer, insbesondere ringförmiger, Randabschnitt des Rands des zumindest einen Formteils entfernbar, insbesondere sodass ein Siegelrand an dem oberen Ende des zumindest einen Formteils verbleibt. Der Siegelrand kann ringförmig ausgebildet sein und/oder (insbesondere in der radialen Richtung des Formteils) eine Siegelrandbreite von beispielsweise 0,5 mm bis 10 mm aufweisen. Die Stanzeinrichtung kann einen Stanzstempel und eine Auflage mit einer Stanzöffnung aufweisen. Das zumindest eine Formteil ist mittels des Stanzstempels durch die Stanzöffnung drückbar, sodass der Rand des zumindest einen Formteils zwischen der Auflage und dem Stanzstempel zumindest teilweise abscherbar ist.

Die Vorrichtung weist eine Fördereinrichtung mit zumindest einem Klemmhalter auf. Die Fördereinrichtung kann nach Art eines umlaufenden Förderbands ausgebildet sein. Der zumindest eine Klemmhalter kann an der Fördereinrichtung, dem Förderband der Fördereinrichtung oder einem Transportsegment der Fördereinrichtung befestigt sein. Das Transportsegment kann als Metallrahmen ausgebildet sein. Das Förderband kann eine Vielzahl von Transportsegmenten aufweisen und/oder zumindest teilweise aus einer Vielzahl von Transportsegmenten bestehen. Die Fördereinrichtung kann eine Mehrzahl oder Vielzahl von Klemmhaltern aufweisen. Die Klemmhalter können in der Förderrichtung nebeneinander und/oder orthogonal zu der Förderrichtung nebeneinander an der Fördereinrichtung, dem Förderband oder den Transportsegmenten angeordnet sein. Beispielsweise können orthogonal zu der Förderrichtung 2 bis 20 Klemmhalter nebeneinander angeordnet sein. Die Klemmhalter können, insbesondere in der Förderrichtung und/oder orthogonal zu der Förderrichtung, in Reihen und/oder Spalten angeordnet sein. Die Klemmhalter können derart ausgebildet und/oder angeordnet sein, dass ein Vorformling und/oder ein Formteil durch maximal zwei Klemmhalter haltbar und/ transportierbar ist. Der zumindest eine Klemmhalter kann mit der Fördereinrichtung, mit dem Förderband der Fördereinrichtung und/oder mit dem Transportsegment, insbesondere in der Förderrichtung, bewegbar sein. Eine Bewegung der Fördereinrichtung, des Förderbands und/oder des Transportsegments kann mit einem Umformvorgang in der zumindest einen Umformeinrichtung und/oder mit einem Stanzvorgang in der zumindest einen Stanzeinrichtung synchronisiert sein. Dies kann insbesondere bedeuten, dass die Bewegung der Fördereinrichtung bzw. des Förderbands während des Umformvorgangs und/oder des Stanzvorgangs stoppt. Der zumindest eine Klemmhalter kann als Klammer oder Zange ausgebildet sein. Der zumindest eine Klemmhalter kann einen, insbesondere öffenbaren und schließbaren, Klemmspalt für den zumindest einen Vorformling und/oder das zumindest eine Formteil aufweisen. Der zumindest eine Klemmhalter kann derart ausgebildet sein, dass der Klemmspalt nur einseitig öffenbar ist, beispielsweise durch ein Scharnier. Der zumindest eine Klemmhalter und/oder der Klemmspalt des zumindest einen Klemmhalters kann mittels eines, insbesondere elektrischen oder hydraulischen, Antriebs öffenbar und/oder schließbar sein. Der Klemmspalt kann einen geraden Verlauf aufweisen. Der Klemmspalt kann (insbesondere in der Förderrichtung) eine Spaltlänge von beispielsweise 10 mm bis 100 mm und/oder (insbesondere orthogonal zu der Förderrichtung und/oder einer horizontalen Richtung) eine Spaltbreite von beispielsweise 1 mm bis 20 mm aufweisen.

Durch den zumindest einen Klemmhalter und/oder in dem Klemmspalt des zumindest einen Klemmhalters ist der zumindest eine Vorformling beim Umformen in der zumindest einen Umformeinrichtung haltbar, das zumindest eine Formteil von der zumindest einen Umformeinrichtung zu der zumindest einen Stanzeinrichtung transportierbar und das zumindest eine Formteil beim zumindest teilweisen Entfernen des Rands des zumindest einen Formteils in der zumindest einen Stanzeinrichtung haltbar. Dies kann insbesondere bedeuten, dass der zumindest eine Vorformling und/oder das zumindest eine Formteil während der gesamten Herstellung des Verpackungselements in der Vorrichtung, d. h. insbesondere während des Umformens in der zumindest einen Umformeinrichtung, während des Transports von der zumindest einen Umformeinrichtung zu der zumindest einen Stanzeinrichtung und während dem zumindest teilweisen Entfernen des Rands in der zumindest einen Stanzeinrichtung, von dem zumindest einen Klemmhalter gehalten und/oder transportiert wird. Beim Halten des Verpackungselement in der Stanzeinrichtung wird das Verpackungselement bevorzugt an dem Rand gehalten, der mit der Stanzeinrichtung von dem Verpackungselement entfernt wird. Die Stanzeinrichtung hält also das Verpackungselement über den Rand. Wenn der Rand von dem Verpackungselement entfernt ist, verbleibt der Rand zunächst in den Klemmhaltern und das Verpackungselement ist von dem Rand (und damit auch von den Klemmhaltern) gelöst. Weiterhin kann dies insbesondere bedeuten, dass der zumindest eine Vorformling und/oder das zumindest eine Formteil während der gesamten Herstellung des Verpackungselements in der Vorrichtung nicht von dem zumindest einem Klemmhalter und/oder nicht aus dem Klemmspalt entfernt oder gelöst wird. Zudem kann dies insbesondere bedeuten, dass während der gesamten Herstellung des Verpackungselements in der Vorrichtung der zumindest eine Klemmhalter nicht geöffnet wird.

Die Vorrichtung kann zumindest eine Zuführstation für den zumindest einen Vorformling aufweisen. Die Vorrichtung kann eine Mehrzahl von Zuführstationen aufweisen, beispielsweise 2 bis 20 Zuführstation. Die Mehrzahl von Zuführstation kann (insbesondere orthogonal zur Förderrichtung der Vorformlinge und/oder der Formteile) nebeneinander angeordnet sein. In der zumindest einen Zuführstation ist dem zumindest einen Klemmhalter zumindest ein Vorformling zuführbar, beispielsweise von einem Vorformlingspeicher. Das Zuführen kann beispielsweise mittels einer Saugvorrichtung oder einem Roboter erfolgen. Beim Zuführen des zumindest einen Vorformlings kann der zumindest eine Klemmhalter bzw. der Klemmspalt geöffnet werden. Nach dem Anordnen des zumindest einen Vorformlings in dem zumindest einen Klemmhalter bzw. dem Klemmspalt kann der zumindest eine Klemmhalter bzw. der Klemmspalt geschlossen werden, sodass der Vorformling, insbesondere in einer horizontalen Ausrichtung, durch den zumindest einen Klemmhalter gehalten wird. Der zumindest eine Vorformling ist durch den bzw. mit dem zumindest einen Klemmhalter von der zumindest einen Zuführstation zu der zumindest einen Umformeinrichtung transportierbar.

Der zumindest eine Vorformling wird beim Umformen in der zumindest einen Umformeinrichtung durch den zumindest einen Klemmhalter gehalten, insbesondere ohne dass der zumindest eine Vorformling zwischen der zumindest einen Zuführstation und der zumindest einen Umformeinrichtung von dem zumindest einen Klemmhalter gelöst wird. Beim Umformen des zumindest einen Vorformlings in der zumindest einen Umformeinrichtung kann der zumindest eine Vorformling teilweise aus dem zumindest einen Klemmhalter bzw. teilweise aus dem Klemmspalt gezogen werden, jedoch ohne dass sich der zumindest eine Vorformling vollständig von dem zumindest einen Klemmhalter löst. Nachdem der zumindest eine Vorformling in das zumindest eine Formteil umgeformt wurde, wird das zumindest eine Formteil durch den zumindest einen Klemmhalter zu der zumindest einen Stanzeinrichtung transportiert bzw. gefördert und während des zumindest teilweisen Entfernens des Rands in der zumindest einen Stanzeinrichtung gehalten.

Da das zumindest eine Formteil nach dem Umformen in der zumindest einen Umformeinrichtung nicht von dem zumindest einen Klemmhalter gelöst wird, befindet sich das zumindest eine Formteil bzw. der Ziehabschnitt des zumindest einen Formteils in dem zumindest einen Klemmhalter in einer definierten Position. Dies erleichtert ein zentriertes bzw. konzentrisches Anordnen und/oder Halten des zumindest einen Formteils in der zumindest einen Stanzeinrichtung bzw. in der Stanzöffnung der Auflage der zumindest einen Stanzeinrichtung. Hierdurch ist der Rand des zumindest einen Formteils insbesondere entlang einer konzentrisch um eine Zentrumsachse des zumindest einen Formteils und/oder entlang einer konzentrisch um den Ziehabschnitt verlaufenden Schnittlinie zumindest teilweise oder vollständig entfernbar. Dies ermöglicht das Verpackungselement insbesondere rotationssymmetrisch auszubilden. Weiterhin ist der Rand hierdurch derart entfernbar, dass ein Siegelrand mit einer (insbesondere in der radialen Richtung des zumindest einen Formteils) konstanten Siegelrandbreite erzeugbar ist. Alternativ ist der Rand des zumindest einen Formteils vollständig entfernbar.

Der Rand wird insbesondere zumindest teilweise derart entfernt bzw. beim zumindest teilweisen Entfernen des Rands wird das Verpackungselement aus dem zumindest einen Formteil insbesondere derart geschnitten, dass der von dem zumindest einen Formteil entfernte Rand in dem zumindest einen Klemmhalter bzw. dem Klemmspalt verbleibt.

Die Vorrichtung kann zumindest eine Entsorgungseinrichtung aufweisen. Die Vorrichtung kann eine Mehrzahl von Entsorgungseinrichtungen aufweisen, beispielsweise 2 bis 20 Entsorgungseinrichtungen. Die Mehrzahl von Entsorgungseinrichtungen kann (insbesondere orthogonal zur Förderrichtung der Vorformlinge und/oder der Formteile) nebeneinander angeordnet sein. Der Rand ist durch den zumindest einen Klemmhalter von der zumindest einen Stanzeinrichtung zu der zumindest einen Entsorgungseinrichtung transportierbar. In der zumindest einen Entsorgungseinrichtung ist der zumindest eine Klemmhalter öffenbar, sodass der Rand an die zumindest eine Entsorgungseinrichtung abgebbar ist.

Das Halten und/oder Transportieren des zumindest einen Vorformlings und/oder des zumindest einen Formteils erfolgt insbesondere nur an dem Rand des zumindest einen Vorformlings und/oder des zumindest einen Formteils, d. h. insbesondere nicht in einem zentralen Bereich des zumindest einen Vorformlings und/oder des zumindest einen Formteils.

Die Vorrichtung kann zumindest einen ersten Klemmhalter und zumindest einen zweiten Klemmhalter aufweisen, durch die der zumindest eine Vorformling beim Umformen in der zumindest einen Umformeinrichtung haltbar, durch die das zumindest eine Formteil von der zumindest einen Umformeinrichtung zu der zumindest einen Stanzeinrichtung transportierbar und durch die das zumindest eine Formteil beim zumindest teilweisen Entfernen des Rands des zumindest einen Formteils in der zumindest einen Stanzeinrichtung haltbar ist. Dies kann insbesondere bedeuten, dass der zumindest eine Vorformling und/oder das zumindest eine Formteil gleichzeitig durch zwei Klemmhalter gehalten und/oder transportiert wird. Der zumindest eine erste Klemmhalter und der zumindest eine zweite Klemmhalter können identisch ausgebildet sein.

Der zumindest eine erste Klemmhalter und der zumindest eine zweite Klemmhalter können sich gegenüberliegen. Insbesondere können sich der zumindest eine erste Klemmhalter und der zumindest eine zweite Klemmhalter in der Förderrichtung gegenüberliegen. Der zumindest eine erste Klemmhalter und der zumindest eine zweite Klemmhalter können den zumindest einen Vorformling und/oder das zumindest eine Formteil an gegenüberliegenden Enden halten.

Der zumindest eine Vorformling und/oder das zumindest eine Formteil können in einer zentrierten Position zwischen dem zumindest einen ersten Klemmhalter und dem zumindest einen zweiten Klemmhalter haltbar sein. Dies kann insbesondere bedeuten, dass ein Zentrum des zumindest einen Vorformlings und/oder ein Zentrum des zumindest einen Formteils mittig zwischen dem zumindest einen ersten Klemmhalter und dem zumindest einen zweiten Klemmhalter haltbar sind.

Der zumindest eine Klemmhalter kann ein erstes Klemmelement und ein zweites Klemmelement aufweisen. Das erste Klemmelement und/oder das zweite Klemmelement können jeweils beispielsweise als Klemmbacke ausgebildet sein. Der Klemmspalt kann zwischen dem ersten Klemmelement und dem zweiten Klemmelement ausgebildet sein. Das erste Klemmelement und/oder das zweite Klemmelement kann flach ausgebildet sein und/oder zumindest teilweise aus Metall oder Kunststoff bestehen. Das erste Klemmelement und/oder das zweite Klemmelement können zum Öffnen und/oder Schließen des Klemmspalt um eine Drehachse drehbar sein. Das erste Klemmelement und/oder das zweite Klemmelement können (insbesondere parallel zu der Drehachse und/oder orthogonal zu der Förderrichtung) eine Dicke von beispielsweise 1 mm bis 20 mm aufweisen. Das erste Klemmelement kann eine S-förmige (erste) Grundfläche und/oder das zweite Klemmelement eine L-förmige (zweite) Grundfläche aufweisen. In einer Schließstellung kann das erste Klemmelement eine Unterseite des zumindest einen Vorformlings und/oder des zumindest einen Formteils kontaktieren und/oder das zweite Klemmelement eine Oberseite des zumindest einen Vorformlings und/oder des zumindest einen Formteils kontaktieren. Bei dem ersten Klemmelement kann es sich um ein unteres Klemmelement und/oder bei dem zweiten Klemmelement um ein oberes Klemmelement handeln. Das erste Klemmelement und/oder das zweite Klemmelement kann an einem Halter des zumindest einen Klemmhalters befestigt sein.

Das zweite Klemmelement kann zwischen einer Offenstellung und einer Schließstellung verstellbar sein. Das zweite Klemmelement kann zwischen der Offenstellung und der Schließstellung um die Drehachse drehbar sein. In der Offenstellung des zweiten Klemmelements ist der zumindest eine Vorformling insbesondere auf dem ersten Klemmelement anordenbar. In der Schließstellung des zweiten Klemmelements ist der zumindest eine Vorformling und/oder das zumindest eine Formteil insbesondere in dem Klemmspalt zwischen dem ersten Klemmelement und dem zweiten Klemmelement anordenbar bzw. einklemmbar. Die Drehachse kann insbesondere orthogonal zu der Förderrichtung und/oder horizontal verlaufen. Das erste Klemmelement kann starr sein.

Das zweite Klemmelement kann durch eine Feder in der Schließstellung haltbar sein. Insbesondere kann das zweite Klemmelement durch die Feder aus der Offenstellung in die Schließstellung verstellbar sein. Die Feder kann als Schraubenfeder ausgebildet sein.

Das zweite Klemmelement kann durch einen Antrieb in die Offenstellung verstellbar sein. Insbesondere kann das zweite Klemmelement durch den Antrieb aus der Schließstellung in die Offenstellung verstellbar sein. Bei dem Antrieb kann es sich beispielsweise um einen elektrischen oder hydraulischen Antrieb handeln.

Ein Niederhalter der zumindest einen Umformeinrichtung kann zumindest eine Aussparung für den zumindest einen Klemmhalter aufweisen. Der zumindest eine Klemmhalter bzw. das zweite Klemmelement des zumindest einen Klemmhalters kann in die zumindest eine Aussparung des Niederhalters eintauchen, wenn der Niederhalter sich in der Niederhalteposition befindet. Hierdurch kann sich der Klemmspalt des zumindest einen Klemmhalters beim Umformen in der zumindest einen Umformeinrichtung zumindest teilweise im Ziehspalt befinden. Die zumindest eine Aussparung kann beispielsweise nach Art einer, insbesondere geraden, Nut ausgebildet sein. Die zumindest eine Aussparung kann in der Niederhalteposition des Niederhalters den zumindest einen Klemmhalter bzw. das zweite Klemmelement derart umgeben, dass zwischen der zumindest einen Aussparung und dem zumindest einen Klemmhalter ein maximal 5 mm breiter Spalt besteht. Zumindest eine entsprechend ausgestaltete Aussparung kann auch in der Matrize ausgebildet sein.

Einem weiteren Aspekt folgend wird auch ein Verfahren zur Herstellung eines Verpackungselements vorgeschlagen, das zumindest die folgenden Schritte aufweist:
a) Halten zumindest eines Vorformlings in zumindest einer Umformeinrichtung mit zumindest einem Klemmhalter einer Fördereinrichtung;
b) Umformen des zumindest einen Vorformlings in zumindest ein Formteil durch die zumindest eine Umformeinrichtung;
c) Transportieren des zumindest einen Formteils von der zumindest einen Umformeinrichtung zu der zumindest einen Stanzeinrichtung durch den zumindest einen Klemmhalter;
d) Halten des zumindest einen Formteils in der zumindest einen Stanzeinrichtung mit dem zumindest einen Klemmhalter; und
e) zumindest teilweises Entfernen eines Rands des zumindest einen Formteils durch die zumindest eine Stanzeinrichtung.

Das Verfahren ist insbesondere mit der hier beschriebenen Vorrichtung durchführbar.

Anzumerken ist, dass die im Zusammenhang mit der Vorrichtung geschilderten Vorteile und Merkmale auch für das Verfahren anwendbar und übertragbar sind. Daher wird für weitere Einzelheiten zu dem Verfahren vollumfänglich auf die Beschreibung der Vorrichtung verwiesen.

Die Erfindung sowie das technische Umfeld der Erfindung werden nachfolgend anhand der Figuren näher erläutert. Die Figuren zeigen ein bevorzugtes Ausführungsbeispiel, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen beispielhaft und schematisch:
- Fig. 1:: eine Vorrichtung zur Herstellung eines Verpackungselements in einer Seitenansicht;
- Fig. 2:: eine Fördereinrichtung der Vorrichtung in einer perspektivischen Teilansicht;
- Fig. 3:: ein erster Klemmhalter in einer Offenstellung in einer perspektivischen Darstellung; und
- Fig. 4:: der erste Klemmhalter in einer Schließstellung in der perspektivischen Darstellung.

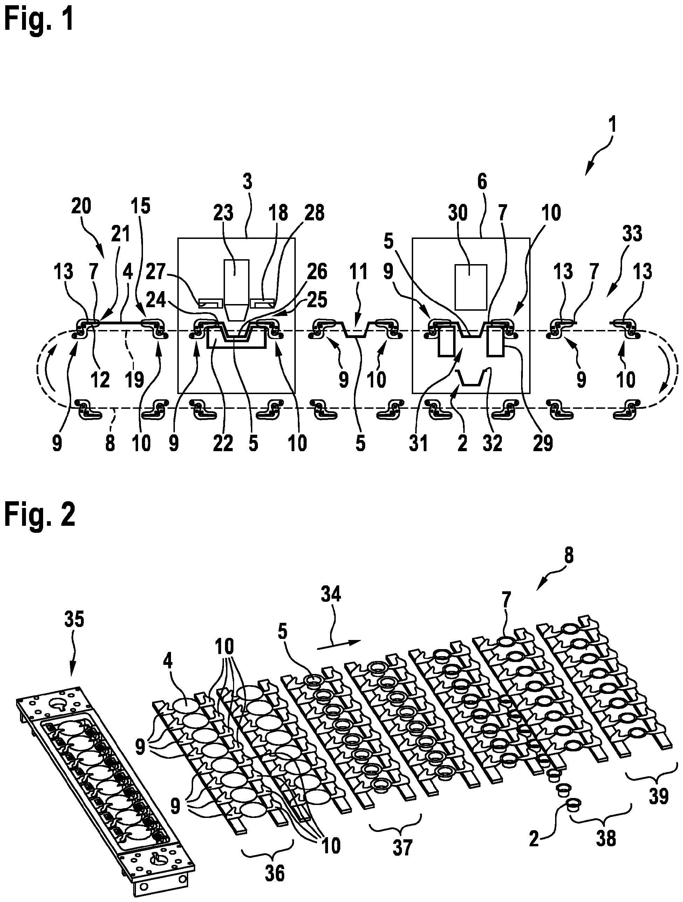

Fig. 1 zeigt eine Vorrichtung 1 zur Herstellung eines Verpackungselements 2 in einer Seitenansicht. Die Vorrichtung 1 weist eine Fördereinrichtung 8 mit einem umlaufenden Förderband 19 auf. An dem Förderband 19 sind erste Klemmhalter 9 und zweite Klemmhalter 10 angeordnet, die sich paarweise gegenüberliegen und mit dem Förderband 19 entlang einer Förderstrecke bewegbar sind. Die Klemmhalter 9, 10 weisen jeweils ein erstes Klemmelement 12 und ein zweites Klemmelement 13 auf.

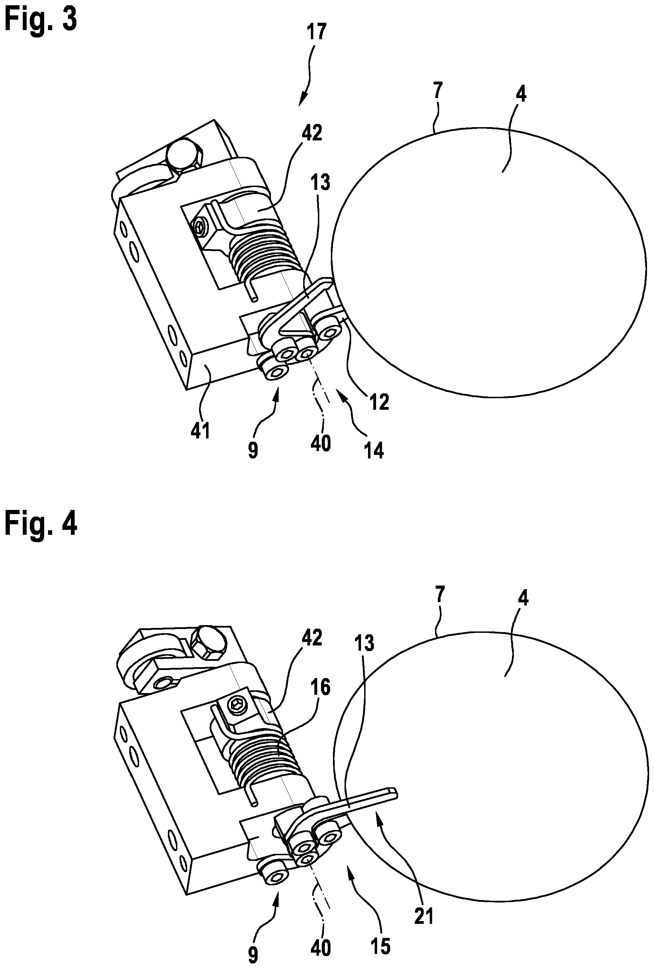

Die Vorrichtung 1 weist eine Zuführstation 20 zum Zuführen von Vorformlingen 4 auf. Bei den Vorformlingen 4 handelt es sich um Ronden. In der Zuführstation 20 ist den sich paarweise gegenüberliegenden Klemmhaltern 9, 10, beispielsweise mit einer hier nicht gezeigten Saugvorrichtung, jeweils ein Vorformling 4 zuführbar. Hierzu sind die zweiten Klemmelemente 13 der Klemmhalter 9, 10 zunächst in eine in Fig. 3 gezeigte Offenstellung 14 verstellbar. In der Offenstellung 14 ist ein Klemmspalt 21 zwischen den Klemmelementen 12, 13 freigegeben, sodass ein Rand 7 der Vorformlinge 4 auf den ersten Klemmelementen 12 anordenbar bzw. ablegbar ist. Anschließend sind die zweiten Klemmelemente 13 in eine in Fig. 4 gezeigte Schließstellung 15 verstellbar, sodass der Rand 7 der Vorformlinge 4 in dem Klemmspalt 21 befestigt bzw. eingeklemmt ist. Die Vorformlinge 4 sind in dem Klemmspalt 21 der Klemmhalter 9, 10 von der Zuführstation 20 zu einer Umformeinrichtung 3 der Vorrichtung 1 transportierbar.

Durch die Umformeinrichtung 3 sind die Vorformlinge 4 zu Formteilen 5 umformbar. Die Umformeinrichtung 3 weist eine Matrize 22, einen ringförmigen Niederhalter 18 und einen Stempel 23 auf. Beim Umformen der Vorformlinge 4 wird der Niederhalter 18 auf die Vorformlinge 4 abgesenkt, sodass die Vorformlinge 4 zwischen dem Niederhalter 18 und einer Oberfläche 24 der Matrize 22 in einem Ziehspalt 25 angeordnet bzw. eingeklemmt sind. Die Vorformlinge 4 sind anschließend durch den Stempel 23 in die Matrize 22 ziehbar. Hierzu drückt der Stempel 23 auf einen (späteren) Boden 26 der Formteile 5. Beim Umformen der Vorformlinge 4 zu den Formteilen 5 wird Material der Vorformlinge 4 aus dem Ziehspalt 25 in die Matrize 22 gezogen. Die Klemmhalter 9, 10 erzeugen in der Schließstellung 15 in dem Klemmspalt 21 insbesondere eine Klemmkraft, die beim Umformen ein teilweises Nachfließen des Materials der Vorformlinge 4 aus dem Klemmspalt 21 ermöglicht. Beim Umformen der Vorformlinge 4 zu den Formteilen 5 kann der Rand 7 der Vorformlinge 4 teilweise aus dem Klemmspalt 21 der Klemmhalter 9, 10 gezogen werden. Nach dem Umformen der Vorformlinge 4 in die Formteile 5 befinden sich die Formteile 5 in einer zentrierten Position 11 zwischen den Klemmhaltern 9, 10.

Der Niederhalter 18 weist für den ersten Klemmhalter 9 eine erste Aussparung 27 und für den zweiten Klemmhalter 10 eine zweite Aussparung 28 auf. Wenn der Niederhalter 18 die Vorformlinge 4 in dem Ziehspalt 25 niederhält, befindet sich der erste Klemmhalter 9 zumindest teilweise in der ersten Aussparung 27 und der zweite Klemmhalter 10 zumindest teilweise in der zweiten Aussparung 28.

Die Formteile 5 sind in dem Klemmspalt 21 der Klemmhalter 9, 10 in der zentrierten Position 11 von der Umformeinrichtung 3 zu einer Stanzeinrichtung 6 der Vorrichtung 1 transportierbar. Die Stanzeinrichtung 6 umfasst eine Auflage 29 und einen Stanzstempel 30. Die Formteile 5 sind durch die Klemmhalter 9, 10 zentriert oberhalb einer Stanzöffnung 31 der Auflage 29 anordenbar. Die Formteile 5 sind durch den Stanzstempel 30 durch die Stanzöffnung 31 drückbar, sodass der Rand 7 der Formteile 5 zwischen der Auflage 29 und dem Stanzstempel 30 abgeschert wird und die Verpackungselemente 2 entstehen. Der Rand 7 wird nur teilweise entfernt, sodass ein Siegelrand 32 an den Verpackungselementen 2 verbleibt. Der abgetrennte Rand 7 ist in dem Klemmspalt 21 der Klemmhalter 9, 10 von der Stanzeinrichtung 6 zu einer Entsorgungseinrichtung 33 der Vorrichtung 1 transportierbar. In der Entsorgungseinrichtung 33 ist der Rand 7 entsorgbar. Hierzu sind die zweiten Klemmelemente 13 der Klemmhalter 9, 10 in die in Fig. 3 gezeigte Offenstellung 14 verstellbar.

Fig. 2 zeigt die Fördereinrichtung 8 in einer perspektivischen Teilansicht. In Fig. 2 ist zu erkennen, dass die Fördereinrichtung 8 eine Mehrzahl von (orthogonal zu einer Förderrichtung 34 der Fördereinrichtung 8) nebeneinander angeordneten, sich paarweise gegenüberliegenden Klemmhaltern 9, 10 aufweist. Im gezeigten Ausführungsbeispiel sind acht sich paarweise gegenüberliegende Klemmhalter 9, 10 nebeneinander angeordnet. Die in Fig. 1 gezeigte Vorrichtung 1 kann eine entsprechende Anzahl von Zuführstationen 20, Umformeinrichtungen 3, Stanzeinrichtungen 6 und/oder Entsorgungseinrichtungen 33 aufweisen, die (insbesondere orthogonal zu der Förderrichtung 34) nebeneinander angeordnet sein können. Die Zuführstationen 20, die Umformeinrichtungen 3, die Stanzeinrichtungen 6 und/oder die Entsorgungseinrichtungen 33 können identisch und/oder wie in Bezug auf Fig. 1 beschrieben ausgebildet sein. Die Klemmhalter 9, 10 sind in Transportsegmenten 35 der Fördereinrichtung 8 angeordnet, von denen zur Vereinfachung in Fig. 2 nur ein Transportsegment 35 gezeigt ist.

In einem ersten Abschnitt 36 der Fördereinrichtung 8 befinden sich die Klemmhalter 9, 10 in der in Fig. 1 gezeigte Zuführstation 20, in der die Vorformlinge 4 den Klemmhaltern 9, 10 zugeführt werden. In einem zweiten Abschnitt 37 der Fördereinrichtung 8 befinden sich die Klemmhalter 9, 10 in der in Fig. 1 gezeigten Umformeinrichtung 3, in der die Vorformlinge 4 zu den Formteilen 5 umgeformt werden. In einem dritten Abschnitt 38 der Fördereinrichtung 8 befinden sich die Klemmhalter 9, 10 in der in Fig. 1 gezeigten Stanzeinrichtung 6, in der der Rand 7 ringförmig von den Formteilen 5 getrennt wird, sodass die Verpackungselemente 2 entstehen. In einem vierten Abschnitt 39 der Fördereinrichtung 8 befinden sich die Klemmhalter 9, 10 in der in Fig. 1 gezeigten Entsorgungseinrichtung 33, in der die ringförmigen Ränder 7 entsorgt werden.

Fig. 3 zeigt den ersten Klemmhalter 9 in einer perspektivischen Darstellung. Der erste Klemmhalter 9 weist das erste Klemmelement 12 und das zweite Klemmelement 13 auf. Bei dem ersten Klemmelement 12 handelt es sich um ein unteres Klemmelement und bei dem zweiten Klemmelement 13 um ein oberes Klemmelement. Die Klemmelemente 12, 13 sind als Klemmschenkel und aus einem Flachmetall ausgebildet. Das erste Klemmelement 12 ist fest und das zweite Klemmelement 13 um eine Drehachse 40 drehbar an einem Halter 41 befestigt. Der Halter 41 ist an dem in Fig. 2 gezeigten Transportsegment 35 der Fördereinrichtung 8 befestigt. Das erste Klemmelement 13 weist eine S-förmige erste Grundfläche und das zweite Klemmelement 14 eine L-förmige zweite Grundfläche auf. Die Klemmelemente 12, 13 liegen in einer gemeinsamen Ebene, die insbesondere orthogonal zu der Drehachse 40 verläuft. Das zweite Klemmelement 13 ist durch einen Antrieb 17, von dem in Fig. 3 nur eine Antriebswelle 42 sichtbar ist, aus der in Fig. 4 gezeigten Schließstellung 15 in die Offenstellung 14 verstellt. In der Offenstellung 14 ist der Vorformling 4 mit seinem Rand 7 auf dem ersten Klemmelement 12 anordenbar.

Fig. 4 zeigt den ersten Klemmhalter 9 in der perspektivischen Darstellung, nachdem das zweite Klemmelement 13 durch eine Feder 16 um die Drehachse 40 in die Schließstellung 15 verstellt wurde. Die Feder 16 ist auf der Antriebswelle 42 angeordnet. In der Schließstellung 15 wird der Rand 7 des Vorformlings 4 in dem Klemmspalt 21 zwischen dem ersten Klemmelement 12 und dem zweiten Klemmelement 13 gehalten.

Die Erfindung erleichtert insbesondere das Beschneiden des Rands 7 des Formteils 5.

### Bezugszeichenliste

- 1: Vorrichtung
- 2: Verpackungselement
- 3: Umformeinrichtung
- 4: Vorformling
- 5: Formteil
- 6: Stanzeinrichtung
- 7: Rand
- 8: Fördereinrichtung
- 9: erster Klemmhalter
- 10: zweiter Klemmhalter
- 11: zentrierte Position
- 12: erstes Klemmelement
- 13: zweites Klemmelement
- 14: Offenstellung
- 15: Schließstellung
- 16: Feder
- 17: Antrieb
- 18: Niederhalter
- 19: Förderband
- 20: Zuführstation
- 21: Klemmspalt
- 22: Matrize
- 23: Stempel
- 24: Oberfläche
- 25: Ziehspalt
- 26: Boden
- 27: erste Aussparung
- 28: zweite Aussparung
- 29: Auflage
- 30: Stanzstempel
- 31: Stanzöffnung
- 32: Siegelrand
- 33: Entsorgungseinrichtung
- 34: Förderrichtung
- 35: Transportsegment
- 36: erster Abschnitt
- 37: zweiter Abschnitt
- 38: dritter Abschnitt
- 39: vierter Abschnitt
- 40: Drehachse
- 41: Halter
- 42: Antriebswelle

## Patentansprüche

1. Vorrichtung (1) zur Herstellung eines Verpackungselements (2), zumindest aufweisend:
- zumindest eine Umformeinrichtung (3) zum Umformen zumindest eines Vorformlings (4) in zumindest ein Formteil (5);
- zumindest eine Stanzeinrichtung (6) zum zumindest teilweisen Entfernen eines Rands (7) des zumindest einen Formteils (5); und
- eine Fördereinrichtung (8) mit zumindest einem Klemmhalter (9, 10), durch den der zumindest eine Vorformling (4) beim Umformen in der zumindest einen Umformeinrichtung (3) haltbar, durch den das zumindest eine Formteil (5) von der zumindest einen Umformeinrichtung (3) zu der zumindest einen Stanzeinrichtung (6) transportierbar und durch den das zumindest eine Formteil (5) beim zumindest teilweisen Entfernen des Rands (7) des zumindest einen Formteils (5) in der zumindest einen Stanzeinrichtung (6) haltbar ist.

2. Vorrichtung (1) nach Anspruch 1, aufweisend zumindest einen ersten Klemmhalter (9) und zumindest einen zweiten Klemmhalter (10), durch die der zumindest eine Vorformling (4) beim Umformen in der zumindest einen Umformeinrichtung (3) haltbar, durch die das zumindest eine Formteil (5) von der zumindest einen Umformeinrichtung (3) zu der zumindest einen Stanzeinrichtung (6) transportierbar und durch die das zumindest eine Formteil (5) beim zumindest teilweisen Entfernen des Rands (7) des zumindest einen Formteils (5) in der zumindest einen Stanzeinrichtung (6) haltbar ist.

3. Vorrichtung (1) nach Patentanspruch 2, wobei sich der zumindest eine erste Klemmhalter (9) und der zumindest eine zweite Klemmhalter (10) gegenüberliegen.

4. Vorrichtung (1) nach Patentanspruch 2 oder 3, wobei der zumindest eine Vorformling (4) und das zumindest eine Formteil (5) in einer zentrierten Position (11) zwischen dem zumindest einen ersten Klemmhalter (9) und dem zumindest einen zweiten Klemmhalter (10) haltbar sind.

5. Vorrichtung (1) nach einem der vorhergehenden Patentansprüche, wobei der zumindest eine Klemmhalter (9, 10) ein erstes Klemmelement (12) und ein zweites Klemmelement (13) aufweist.

6. Vorrichtung (1) nach Patentanspruch 5, wobei das zweite Klemmelement (13) zwischen einer Offenstellung (14) und einer Schließstellung (15) verstellbar ist.

7. Vorrichtung (1) nach Patentanspruch 6, wobei das zweite Klemmelement (13) durch eine Feder (16) in der Schließstellung (15) haltbar ist.

8. Vorrichtung (1) nach Patentanspruch 6 oder 7, wobei das zweite Klemmelement (13) durch einen Antrieb (17) in die Offenstellung (14) verstellbar ist.

9. Vorrichtung (1) nach einem der vorhergehenden Patentansprüche, wobei ein Niederhalter (18) der zumindest einen Umformeinrichtung (3) zumindest eine Aussparung (27, 28) für den zumindest einen Klemmhalter (9, 10) aufweist.

10. Verfahren zur Herstellung eines Verpackungselements (2), aufweisend zumindest die folgenden Schritte:
a) Halten zumindest eines Vorformlings (4) in zumindest einer Umformeinrichtung (3) mit zumindest einem Klemmhalter (9, 10) einer Fördereinrichtung (8);
b) Umformen des zumindest einen Vorformlings (4) in zumindest ein Formteil (5) durch die zumindest eine Umformeinrichtung (3);
c) Transportieren des zumindest einen Formteils (5) von der zumindest einen Umformeinrichtung (3) zu der zumindest einen Stanzeinrichtung (6) durch den zumindest einen Klemmhalter (9, 10);
d) Halten des zumindest einen Formteils (5) in der zumindest einen Stanzeinrichtung (6) mit dem zumindest einen Klemmhalter (9, 10); und
e) zumindest teilweises Entfernen eines Rands (7) des zumindest einen Formteils (5) durch die zumindest eine Stanzeinrichtung (6).
